# EUROPÄISCHE PATENTSCHRIFT

(11) **EP 2 514 048 B1**
(45) Veröffentlichungstag und Bekanntmachung des Hinweises auf die Patenterteilung: **27.12.2017**
(21) Anmeldenummer: 09806162.5
(22) Anmeldetag: 26.11.2009
(51) Int. Cl.: H01S 3/0941

(54) **MINIATURISIERTE LASERVERSTÄRKERANORDNUNG MIT PUMPQUELLE**
MINIATURIZED LASER AMPLIFIER ARRANGEMENT HAVING A PUMP SOURCE
SYSTÈME AMPLIFICATEUR LASER MINIATURISÉ AVEC SOURCE DE POMPAGE

(43) Veröffentlichungstag der Anmeldung: 24.10.2012
(73) Patentinhaber: Spherea GmbH, 89077 Ulm (DE)
(72) Erfinder: PEUSER, Peter, 85521 Riemerling (DE); PLATZ, Willi, 80992 München (DE)
(74) Vertreter: Mazabraud, Xavier
(86) Internationale Anmeldenummer: PCT/DE2009/001676
(87) Internationale Veröffentlichungsnummer: WO 2011/063777

(56) Entgegenhaltungen:
- WO-A1-90/15462
- WO-A2-2007/056999
- DE-A1-102006 030 722
- DE-A1-102006 059 223
- US-B1- 6 373 864
- US-B1- 6 512 630
- US-B1- 6 553 052
- SAIKAWA J ET AL: "High-energy, narrow-bandwidth 2-Î 1/4 m optical parametric oscillator/power amplifier based on periodically poled MgO:LiNbO3", LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21. Mai 2006 (2006-05-21), Seiten 1-2, XP031394201, ISBN: 978-1-55752-813-1

## Beschreibung

Die Erfindung betrifft eine insbesondere miniaturisierte Laserverstärkeranordnung mit den Merkmalen des Oberbegriffes des beigefügten Patentanspruches 1, wie sie aus der US 6,512,630 B1 bekannt ist. Auf diese Druckschrift wird hiernach noch näher eingegangen.

Die Erfindung betrifft insbesondere einen kompakten, fasergekoppelten Festkörperlaseroszillatorlaser-Verstärker für die Erzeugung von Laserstrahlung hoher Strahlqualität und hoher Leistung.

Für zahlreiche Anwendungen sind miniaturisierte Laser wünschenswert oder sogar erforderlich, die gepulste Laserstrahlung mit Pulsbreiten von wenigen Nanosekunden und Pulsenergien im Bereich von mehreren mJ erzeugen können. Anwendungsbeispiele sind langreichweitige Laser-Messsysteme, Laser für Materialfeinbearbeitung oder zur Anregung optisch nicht linearer Prozesse. Diodengepumpte Festkörperlaser sind hierfür besonders geeignet. Für nähere Einzelheiten hierzu wird auf P. Peuser, N. P. Schmitt: "Diodengepumpte Festkörperlaser", Springer Verlag, 1995, verwiesen. Die erforderlichen Pulsleistungen liegen typischerweise im Bereich von etwa 100 kW bis zu mehr als einem MW.

Mittels passiver Güteschaltung lassen sich besonders kompakte oder auch miniaturisierte Pulslaser realisieren, jedoch ist derzeit ein zuverlässiger Betrieb mit hoher Strahlqualität und Amplitudenstabilität nur bei maximalen Pulsenergien von wenigen mJ möglich. Entsprechende Pulslaser sind in P. Peuser, W. Platz, P. Zeller, T. Brand, B. Köhler, M. Haag; Opt. Lett. 31 (2006) 1991 beschrieben. Um eine Leistungsskalierung zu erreichen, können ein oder auch mehrere Verstärker mit einem mehrfachen Strahlengang (Multipass) nachgeschaltet werden, wodurch besonders große Pulsenergien erzielt werden. Allerdings sind dann die Möglichkeiten für eine weitgehende Miniaturisierung reduziert.

Wenn bei der Anregung des aktiven Materials die sogenannte longitudinale Pumpgeometrie angewandt werden kann, werden optimale Voraussetzungen geschaffen, um einen hohen Wirkungsgrad und eine große Kompaktheit zu erreichen. Nähere Einzelheiten hierzu sind der oben genannten Literaturstelle P. Peuser, N. P. Schmitt: Diodengepumpte Festkörperlaser, Springer Verlag 1995 zu entnehmen.

Besonders vorteilhaft für praxistaugliche Lasersysteme ist es, wenn die Koppelung mit der Versorgungs- und Kontrollelektronik über eine mehrere Meter lange Faserverbindung hergestellt werden kann.

Die in letzter Zeit entwickelten gepulsten Faserlaser oder Faserverstärker-Anordnungen zeichnen sich durch eine sehr kompakte Bauweise und eine hohe Strahlqualität aus, jedoch liegen die verfügbaren Pulsleistungen meist unterhalb von 100 kW, was für viele Anwendungen nicht mehr ausreicht.

Hierbei begrenzen verschiedene grundlegende physikalische Prozesse die Pulsenergien auf den Bereich von typischerweise etwa 1 mJ. Diese Prozesse sind in erster Linie ASE (sog. Amplified Spontaneous Emission), Stimulierte Brillouin-Streuung, Stimulierte Raman-Streuung sowie Selbstfokussierung. Es wird in diesem Zusammenhang für weitere Einzelheiten auf F. D. Teodoro et al., Opt. Lett. 27 (2002) 518 und R. L. Farrow et al., Opt. Lett. 31 (2006) 3423 verwiesen. Aufgrund des kleinen Faserquerschnitts kommen im ns-Pulsbetrieb extrem hohe Intensitäten zustande, so dass bei einer Skalierung der Pumpleistung die Faser schließlich zerstört wird. Um einige wenige mJ zu erzeugen, muss der Faserquer schnitt so weit vergrößert werden, dass die Strahlqualität erheblich reduziert würde.

Aus der US 6 553 052 B1 ist eine Laserverstärkeranordnung mit einem Laseroszillator und einem Laserverstärker bekannt, wobei der Laseroszillator und der Laserverstärker durch eine gemeinsame Laserdiode gepumpt werden. Der verstärkte Laserstrahl wird seitlich aus der Laserverstärkungsanordnung ausgekoppelt. Der Pumpstrahl der Laserdiode tritt zuerst in den Laserverstärker ein, um diesen zu pumpen. Eine verbleibende Pumpstrahlung, die durch den Laserverstärker hindurchgeht (Transmission) dient zum Pumpen des Laseroszillators, um die zu verstärkende Laserstrahlung zu erzeugen. Hierzu ist der Laserverstärker zwischen dem Laseroszillator und der Pumpquelle angeordnet. Der durch den Laserverstärker hindurchgehende verbleibende Teil der Pumpstrahlung wird an einem Vorderende in den Laseroszillator hineingeleitet, durch welches auch die zu verstärkende Laserstrahlung aus dem Laseroszillator austritt, um dann in den Laserverstärker eingeleitet zu werden. Die an dem zu der Pumpquelle hin gerichteten Ende des Laserverstärkers austretende verstärkte Laserstrahlung muss dann seitlich ausgekoppelt werden, da die Pumpquelle in Richtung der Längsachse im Weg steht. Zum Einkoppeln der Restpumpstrahlung in den Laseroszillator ist eine Strahloptik mit Blenden vorgesehen, die Linsen mit zentralen Öffnungen für den ungehinderten Durchgang der zurückstrahlenden Laseroszillatorstrahlung aufweist.

Diese Konfiguration ermöglicht zwar, dass ein großer Teil der Pumpstrahlung für die Laserverstärkung zur Verfügung steht, stellt aber der Miniaturisierung erhebliche Grenzen.

Aus der US 6 373 864 B1 ist eine Laserverstärkeranordnung bekannt, die als gänzlich passives Lasersystem zum Erzeugen und Verstärken kurzer Pulse mit hoher Wiederholrate geeignet sein soll. Hierzu ist ein Mikrochiplaser als Laseroszillator vorgesehen, der zum Erzeugen kurzer Laserpulse mit hoher Wiederholrate optimiert ist. Hierzu ist dessen Resonatorlänge sehr kurz gewählt, um kurze Pulse erzeugen zu können. Ferner ist eine erste Pumpquelle für den Laseroszillator im Hinblick auf eine hohe Wiederholrate optimiert. Hierzu ist die erste Pumpquelle mit einer besonders hellen Pumplichtquelle versehen. Die durch die erste Pumpquelle erzeugte Pumpstrahlung wird durch eine erste Pumpstrahloptik oder in einer alternativen Ausführungsform durch eine erste Lichtleitfaser an einem ersten Längsende in den Laseroszillator eingekoppelt. An dem entgegengesetzten Längsende des Laseroszillators tritt dann die zu verstärkende Laserstrahlung aus, die durch eine Fokussieroptik in einen zu der Längsachse des Laseroszillators versetzt angeordneten Laserverstärkerkristall an dessen ersten Längsende eingeleitet wird. Am entgegengesetzten zweiten Längsende ist der Laserverstärkerkristall mit einem Reflektor für die zu verstärkende Laserstrahlung versehen, so dass der verstärkte Laserstrahl wiederum zurück gerichtet durch das erste Längsende und versetzt zu der eintretenden Laserstrahlung wieder austritt und durch die Fokussieroptik ausgeleitet wird. Der Laserverstärkerkristall wird durch eine zweite Pumpquelle gepumpt, die hinsichtlich der Lichtpolarisation und der Strahlung zum Verstärken optimiert ist, um eine besonders große Verstärkung zu erzielen. Diese zweite Pumpquelle weist eine zweite Pumpstrahlquelle und eine eigene zweite Pumpstrahloptik auf, mit der die dadurch erzeugte zweite Pumpstrahlung entgegengerichtet und hinsichtlich der Längsachsen versetzt zu der ersten Pumpstrahlung in die aus Laseroszillator und Laserverstärkungskristall gebildete Laseroszillator-Verstärker-Konfiguration eingeleitet wird. Die Einleitung erfolgt nämlich an dem zweiten Längsende des Laserverstärkungkristalls, das mit der reflektierenden Beschichtung zum Reflektieren der zu verstärkenden Laserstrahlung versehen ist.

Diese reflektierende Beschichtung soll dazu dienen, den Laserstrahl zweifach durch das Laserverstärkungskristall zu führen, um so die Verstärkung zu erhöhen. Die zweite Pumpstrahlleiteinrichtung kann wie die erste Pumpstrahlleiteinrichtung eine Lichtleitfaser aufweisen. Aber auch bei der Lichtleitfaser wird diese zweite Pumpstrahlung durch das zweite Längsende des Laserverstärkerkristalls eingeleitet, während die erste Pumpstrahlung an dem gegenüberliegenden ersten Längsende des Laseroszillators und hierzu noch versetzt in die Laser-Verstärker-Konfiguration eingeleitet wird.

Die Laserverstärkeranordnung gemäß diesem Stand der Technik ist zwar hinsichtlich einer Verstärkung möglichst kurzer Impulse bei möglichst hoher Wiederholrate optimiert, jedoch für eine Miniaturisierung völlig ungeeignet.

In der eingangs erwähnten US 6 512 630 B1 wird dagegen eine miniaturisierte Konfiguration beschrieben, bei der ein sogenannter passiv gütegeschalteter Mikrolaser oder allgemein miniaturisierter Laser mit einem Verstärker gekoppelt ist. Die gesamte Pumpstrahlung wird dabei in den Mikrolaser eingekoppelt und dabei teilweise im Laserkristall absorbiert. Die transmittierte restliche, im Laseroszillator nicht absorbierte Pumpstrahlung wird gemeinsam mit dem vom Mikrolaser erzeugten Laserstrahl mittels einer Linse in den Verstärkerkristall fokussiert. Der aus dem Oszillator austretende Laserstrahl wird dann in dem Verstärkerkristall verstärkt. Die gesamte Pumpstrahlung wird bei diesem Stand der Technik von einer einzigen Diodenlaser-Strahlquelle bereitgestellt.

Allerdings ist eine solche Konfiguration für eine effiziente Skalierung der Leistung bzw. der Pulsenergie nicht geeignet, wie im folgenden erläutert wird. Dabei lassen sich grundsätzlich zwei unterschiedliche Pumparten unterscheiden: die quasi kontinuierliche oder gepulste Anregung und die kontinuierliche Anregung.

Bei der quasi kontinuierlichen Anregung kann ein einziger Puls erzeugt werden, der die maximal mögliche Energie enthält, oder es können auch mehrere Pulse kleinerer Energie während eines Pumpzyklus erzeugt werden.

Im Falle der gepulsten Anregung gilt: bei einer Erhöhung der Pumpleistung wird der Laserpuls von dem Oszillator, bezogen auf den Beginn eines Pumpstrahlungspulses konstanter Länge, früher erzeugt. Infolge dessen kann die im Verstärker gespeicherte Energie danach nicht mehr genutzt werden, und die gesamte Verstärkung kann nicht mehr erhöht werden. Damit direkt verbunden ist auch die Reduktion des Gesamtwirkungsgrades. Eine zeitliche Anpassung des Oszillatorpulses an die Pumpstrahlungsdauer ist entscheidend, um eine maximale Pulsenergie und einen großen Wirkungsgrad zu erzielen.

Andererseits werden bei einer Erhöhung der Pumpleistung im allgemeinen mehrere Pulse während eines Pumpzyklus erzeugt, welche jeweils eine kleinere Pulsenergie enthalten. Der zeitliche Abstand der Pulse wird umso kleiner, je größer die Pumpleistung wird. Das heißt in diesem Falle, dass eine Erhöhung der Gesamtpumpleistung, um eine größere Verstärkung zu erzielen, gleichzeitig zu einer Änderung der Pulsrate führt.

Ähnliches gilt für den Fall der kontinuierlichen Anregung. Hierbei wird die Pulsrate erhöht, verbunden mit einer gleichzeitigen Reduktion der Einzelpulsenergie der von dem Laseroszillator erzeugten Pulse, wenn die Gesamtpumpleistung der Laseroszillator-Verstärker-Anordnung erhöht wird. Oder, anders formuliert, eine Änderung der Pumpleistung oder der Verstärkung bewirkt eine Veränderung der Pulsrate. Darüber hinaus ändert sich auch die Pulsbreite, da sich auch die Inversionsdichte im Laseroszillatorkristall ändert.

Aufgabe der Erfindung ist es, einen leistungsstarken, leistungsregelbaren Laser mit hoher Strahlqualität und einem großen Wirkungsgrad zu schaffen, der sehr stark miniaturisierbar ist.

Diese Aufgabe wird durch eine Laserverstärkeranordnung mit den Merkmalen des beigefügten Patentanspruches 1 gelöst.

Vorteilhafte Ausgestaltungen der Erfindung sind Gegenstand der Unteransprüche. Vorteilhafte Verwendungen der Laserverstärkeranordnung sind Gegenstand des Nebenanspruches.

Die erfindungsgemäße Laserverstärkeranordnung weist eine optische Pumpquelle und eine Laseroszillator-Verstärker-Konfiguration auf, die durch Pumpstrahlung aus der Pumpquelle gepumpt werden kann. Die Laseroszillator-Verstärker-Konfiguration ist axial angeordnet. Aufgrund der axialen Anordnung entlang der Laserachse lassen sich die Dimensionen der Konfiguration sehr gering halten. Die Laseroszillator-Verstärker-Konfiguration weist einen Laseroszillator und einen Laserverstärker auf. Der Laseroszillator ist durch Pumpstrahlung zum Aussenden eines Laserstrahles anregbar, der zu dem Laserverstärker geleitet wird und dort verstärkt wird. Hierzu wird der Laserverstärker ebenfalls durch Pumpstrahlung angeregt. Zum Erreichen eines hohen Miniaturisierungsgrades sind der Laseroszillator und der Laserverstärker bezüglich einer Längsachse der Laseroszillator-Verstärker-Konfiguration im wesentlichen koaxial oder kollinear angeordnet.

Die Pumpquelle weist wenigstens zwei Strahlquellen auf. Eine erste Strahlquelle erzeugt eine erste Pumpstrahlung zum Pumpen des Laseroszillators. Wenigstens eine zweite Strahlquelle erzeugt eine zweite Pumpstrahlung für den Laserverstärker. Beide Pumpstrahlungen werden derart in die Laseroszillator-Verstärker-Konfiguration eingeleitet, dass diese in longitudinaler Richtung angeregt wird.

Hierzu ist eine Pumpstrahlungsleiteinrichtung vorgesehen, mittels der die beiden Pumpstrahlungen zum longitudinalen Pumpen im wesentlichen in Richtung der Längsachse in die Laseroszillator-Verstärker-Konfiguration einleitbar sind.

Vorzugsweise wird Laserstrahlung aus mindestens zwei oder mehreren unabhängig voneinander betriebenen fasergekoppelten Diodenlaser-Strahlquellen verwendet, um eine kompakte, axial angeordnete Laseroszillator-Verstärker-Konfiguration (vorzugsweise eine Festkörperlaseroszillator-Verstärker-Konfiguration) in longitudinaler Richtung anzuregen. Dabei ist bevorzugt, den Laseroszillator und den Verstärker unabhängig voneinander optisch zu pumpen.

Gemäß bevorzugter Ausgestaltungen kann der Laser passiv oder aktiv gütegeschaltet werden.

Durch diese Konfiguration wird erreicht, dass mit einem sehr hohen Miniatusierungsgrad ein leistungsstarker, leistungsregelbarer Laser mit hoher Strahlqualität und einem großen Wirkungsgrad entsteht.

Vorteilhafte Anwendungen der Laserverstärkeranordnung sowie deren vorteilhafter Ausgestaltungen sind:
a) Roboter -getragene Lasersysteme
b) Miniaturisierte, flugzeuggetragene Lidar-Systeme
c) Lasertransmitter für Weltraumanwendungen
d) Pumplaser für optisch nichtlineare Prozesse

Vorzugsweise wird eine äußerst kompakte, optimal regelbare Laserkonfiguration realisiert, mit der leistungsstarke ns-Pulse erzeugt werden können. Die hier dargestellte Konfiguration erlaubt es darüber hinaus, eine aktive Güteschaltung anzuwenden.

Vorteilhafterweise wird die erfindungsgemäße Pumpkonfiguration in Verbindung mit optischen Umlenksystemen - beispielsweise mit Linsen und mit feinmechanischen Elementen - verwendet, welche die zweite Pumpstrahlung an dem Laseroszillator vorbei zu dem Laserverstärker leitet. Dadurch können der Laseroszillator und der Verstärker unabhängig voneinander optimiert und aufeinander abgestimmt werden, so dass Laserstrahlung mit hoher Strahlqualität, leistungsstarken Laserpulsen und einem hohen Wirkungsgrad erzeugbar ist.

Von der gesamten Pumpstrahlungsleistung der Pumpquelle hat die zum Anregen des Laserverstärkers einzusetzende zweite Pumpstrahlung vorzugsweise den weitaus überwiegenden Anteil. Dies lässt sich beispielsweise dadurch erreichen, dass die zweite Strahlungsquelle als Hochleistungsdiodenlaser ausgeführt ist, während die erste Strahlquelle ein Diodenlaser mit kleinerer Leistung sein kann. In einer anderen vorteilhaften Ausgestaltung weist die Pumpquelle zum Bilden der zweiten Strahlungsquelle eine Mehrzahl von Diodenlasern auf, die gemeinsam die zweite Pumpstrahlung erzeugen.

Die erste und die zweite Pumpstrahlung werden vorzugsweise über eine optische Faserleitung zu der Laseroszillator-Verstärker-Konfiguration geleitet. Zum Zwecke der möglichst großen Miniaturisierung sind verschiedene Konfiguration dieser optischen Faserleitung denkbar. Es kann eine parallele Anordnung einer ersten optischen Faser zum Leiten der ersten Pumpstrahlung und einer zweiten optischen Faser zum Leiten der zweiten Pumpstrahlung derart gewählt werden, dass die Fasern eng nebeneinander liegen. Besonders bevorzugt ist eine Ausgestaltung, bei der die erste optische Faser mittig innerhalb einer zweiten Faseranordnung angeordnet ist. Auf diese Weise wird die zweite Pumpstrahlung rings um die erste Pumpstrahlung herum eingeleitet. Die erste optische Faser kann so leicht bis hin zu dem Laseroszillator geleitet werden, wobei die radial außerhalb der ersten optischen Faser eingestrahlte zweite Pumpstrahlung beispielsweise über eine optische Umlenkeinrichtung radial außerhalb um den Laseroszillator herum in Längsrichtung an diesem vorbei bis zum dem Laserverstärker geleitet werden kann.

Eine solche Anordnung kann beispielsweise dadurch realisiert werden, dass die zweite optische Faser die erste optische Faser ringförmig umgibt.

Insbesondere in dem Fall, dass die zweite Strahlquelle eine Gruppe von zweiten Diodenlasern aufweist, kann die optische Faserleitung auch ein Faserbündel aus zweiten optischen Fasern aufweisen, wobei in der Mitte dieses Faserbündels (dies muss nicht exakt in der Mitte sein, wenngleich dies bevorzugt ist) die erste optische Faser angeordnet ist.

Ausführungsbeispiele der Erfindung werden nachfolgend anhand der beigefügten Zeichnungen näher erläutert. Darin zeigt:
- Fig. 1: eine schematische Darstellung einer ersten Ausführungsform einer Laserverstärkungsanordnung mit Pumpquelle und Laseroszillator-Verstärker-Konfiguration;
- Fig. 1a: eine schematische Darstellung einer zweiten Ausführungsform der Laserverstärkeranordnung;
- Fig. 2: eine schematische Darstellung einer bei der Pumpquelle von Fig. 1 einsetzbaren Pumpstrahlungsleiteinrichtung;
- Fig. 2a: eine schematische Darstellung einer alternativen Ausgestaltung der Pumpstrahlungsleiteinrichtung;
- Fig. 3: eine schematische Darstellung der bei der zweiten Ausführungsform der Laserverstärkeranordnung verwendbaren Pumpstrahlungsleiteinrichtung;
- Fig. 4: eine schematische Darstellung einer dritten Ausführungsform der Laserverstärkeranordnung; und
- Fig. 5: eine schematische Darstellung einer vierten Ausführungsform der Laserverstärkeranordnung.

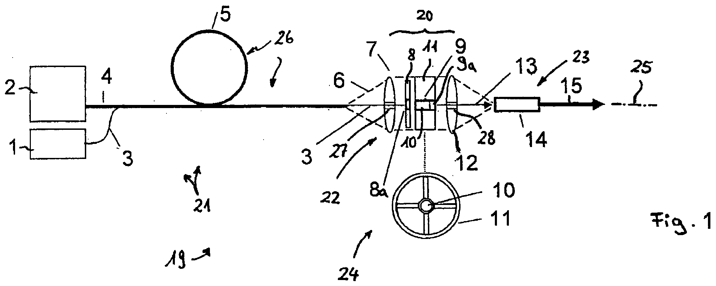

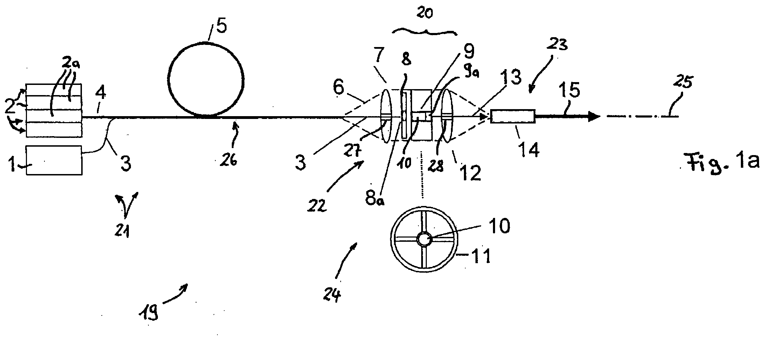

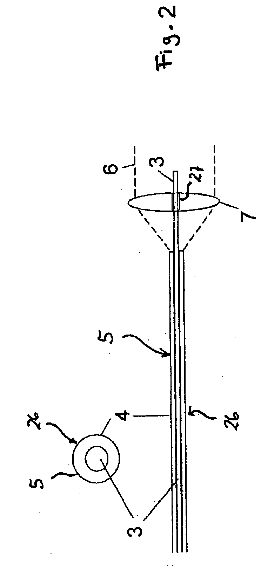

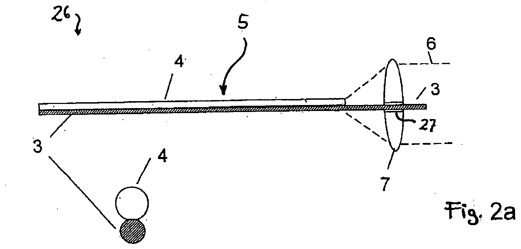

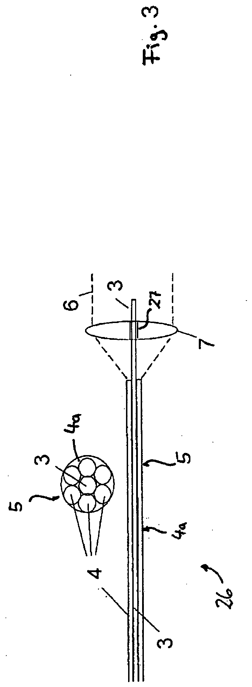

Die Figuren 1, 1a, 4 und 5 zeigen unterschiedliche Ausführungsformen einer Laserverstärkeranordnung 19, die eine Pumpquelle 21 sowie eine Laseroszillator-Verstärker-Konfiguration 24 aufweisen. Die Figuren 2, 2a und 3 zeigen unterschiedliche Ausgestaltungen von Pumpstrahlungsleiteinrichtungen 26 zum Einleiten der durch die Pumpquelle 21 erzeugten Pumpstrahlung in die Laseroszillator-Verstärker-Konfiguration 24.

Bei allen Ausführungsformen der Laserverstärkeranordnung 19 wird die Strahlung von wenigstens zwei oder mehreren Strahlquellen verwendet, um die kollineare Laseroszillator-Verstärker-Konfiguration 24 zu pumpen. Dabei wird die longitudinale Pumpkonfiguration genutzt, welche besondere Vorteile hinsichtlich Wirkungsgrad und Strahlqualität bietet, wie dies im einzelnen in P. Peuser, N. P. Schmitt, Diodengepumpte Festkörperlaser, Springer Verlag 1995, ausgeführt ist. Geeignete laseraktive Materialien sind beispielsweise die gut bekannten Nd: YAG und Nd: YLF-Kristalle oder auch Kristalle mit Dotierungen aus Yb, Tm oder Ho.

Bei den dargestellten Ausführungsformen der Laserverstärkeranordnung 19 werden als Strahlquellen für die Pumpquelle 21 wenigstens zwei oder mehrere leistungsstarke, fasergekoppelte Diodenlaser 1, 2, 2a vewendet.

Die in Fig. 1 dargestellte erste Ausführungsform der Laserverstärkeranordnung 19 zeigt eine Pumpquelle 21, bei der als erste Strahlquelle für die erste Pumpstrahlung ein erster Diodenlaser 1 und als zweite Strahlquelle für die zweite Pumpstrahlung 6 wenigstens ein zweiter Diodenlaser 2, hier in Form eines Hochleistungsdiodenlasers mit größerer Leistung als der erste Diodenlaser 1 eingesetzt ist.

Die Pumpstrahlungsleiteinrichtung 26 weist mehrere optische Fasern 3, 4 auf, um die erste und zweite Pumpstrahlung zu der Laseroszillator-Verstärker-Konfiguration 24 zu leiten. Eine erste optische Faser 3 wird dazu verwendet, um einen miniaturisierten Laseroszillator 9 zu pumpen, während der größere Teil der insgesamt verfügbaren Pumpstrahlung von einer oder mehreren zweiten Fasern 4 bereitgestellt wird, um einen Verstärkerkristall 14 optisch anzuregen.

Die Laseroszillator-Verstärker-Konfiguration 24 weist den Laseroszillator 9 sowie einen Laserverstärker 23 auf. Weiter ist eine optische Umlenkeinrichtung 22 vorgesehen, mittels welcher die zweite Pumpstrahlung 6 kollimiert wird, so dass die zweite Pumpstrahlung 6 über eine bestimmte definierte Wegstrecke 20 von mehreren Millimetern bis zu mehreren Zentimetern quasi-parallel - hier parallel zur Längsache 25 der Laseroszillator-Verstärker-Konfiguration 24 - verläuft.

Im Zentrum dieser die Strecke 20 durchlaufenden zweiten Pumpstrahlung 6 befindet sich in einer axialen Anordnung der Laseroszillator 9 mit einem Laserkristall 10. Der Laserkristall 10 ist an eine Halterung 11 mit Stegen derart gehalten, dass möglichst viel der zweiten Pumpstrahlung 6 durch die Halterung 11 hindurchtreten kann, um so an dem Laserkristall 10 vorbeigeleitet zu werden und dann anschließend auf den Verstärkerkristall 14 des Laserverstärkers 23 fokussiert zu werden. Auf diese Weise wird die zweite Pumpstrahlung 6 zur optischen Anregung des Laserverstärkers 23 verwendet.

Bei der in den Figuren 1 und 1 a dargestellten Ausführungsformen ist der Laserkristall 10 mit einem passiven Güteschalter (-kristall) 9a verbunden. Der Laserkristall 10 mit dem Güteschalter 9a befindet sich zentral in der Halterung 11.

Der Laserkristall 10 kann mit dem passiven Güteschalterkristall 9a optisch kontaktiert sein (sog. quasi-monolithischer Laser), wobei die Austrittsfläche dieser Kristallkonfiguration für die Laserwellenlänge partiell reflektierend beschichtet ist, so dass ein Laserstrahl 13 in Form kurzer Laserpulse mit einer Pulsbreite von typischerweise einigen Nanosekunden emittiert wird. Es wird für nähere Einzelheiten zu den Grundlagen der physikalischen Vorgänge auf P. Peuser, N. P. Schmitt: Diodengepumpte Festkörperlaser, Springer Verlag 1995 verwiesen.

Weiter ist bei den Ausführungsformen gemäß den Figuren 1 und 1 a an einer Halterung 8 eine erste (kleinere) Fokussierlinse 8a für die erste Pumpstrahlung vor dem Laseroszillator 9 vorgesehen. Damit kann die Pumpgeometrie des Laseroszillators 9 optimal gestaltet werden. Die kleinere Fokussierlinse 8a hat gegenüber dem Durchmesser der Pumpstrahlung 6 entlang der Strecke 20 einen wesentlich kleineren Querschnitt. Die erste Fokussierlinse 8a ist vor der Einkoppelfläche des Laserkristalls 10 angebracht, so dass die in den Laseroszillator 9 einzuleitende erste Pumpstrahlung in den Laserkristall 10 fokussiert wird. Die Halterung 8 für die erste Fokussierlinse 8a kann einstellbar ausgebildet sein, so dass der Abstand der ersten Fokussierlinse 8a zum Laserkristall 10 variabel ist. Dadurch kann die Pumpgeometrie für den Laseroszillator 9 optimiert werden und insbesondere können der Wirkungsgrad und die Pulsenergie bestimmt werden.

Die optische Umlenkeinrichtung 22 weist eine Kollimator-Linseneinrichtung auf, die - wie dargestellt - durch eine Kollimatorlinse 7 oder durch eine als Kollimatorlinse wirkende Eintrittsfläche eines Linsenblocks (nicht dargestellt) ausgebildet sein kann. Die Kollimator-Linseneinrichtung dient zum Kollimieren der zweiten Pumpstrahlung 6. Weiter weist die optische Umlenkeinrichtung 22 eine zweite Fokussierlinse 12 auf, um am Ende der Strecke 20 die an dem Laseroszillator 9 vorbeigeleitete zweite Pumpstrahlung 6 in den Laserkristall 14 zu fokussieren.

Die Kollimatorlinse 7 ist mit einem ersten Durchlass 27 versehen, um die erste Pumpstrahlung ohne Beeinflussung durch die optische Umlenkeinrichtung 22 zu dem Laseroszillator 9 leiten zu können. Die zweite Fokussierlinse 12 ist mit einem zweiten Durchlass 28 versehen, um den Laserstrahl 13 unbeeinflusst durch die optische Umlenkeinrichtung 22 zu dem Laserkristall 14 zu leiten. In dem Laserkristall 14 wird, angeregt, durch die zweite Pumpstrahlung 6, der Laserstrahl 13 verstärkt, so dass ein verstärkter Laserstrahl 15 austritt.

Die erste Ausführungsform der Laserverstärkeranordnung 19 gemäß Fig. 1 sowie die zweite Ausführungsform der Laserverstärkungsanordnung 19 gemäß Fig. 1a unterscheiden sich im wesentlichen durch die Pumpquelle 21. Bei der ersten Ausführungsform hat die Pumpquelle den ersten Diodenlaser 1 als erste Strahlquelle zum Erzeugen der ersten Pumpstrahlung und den Hochleistungsdiodenlaser als zweiten Diodenlaser 2 zum Erzeugen der zweiten Pumpstrahlung. Bei der zweiten Ausführungsform ist anstelle des Hochleistungsdiodenlasers eine Gruppe von Diodenlaser-Strahlquellen 2a vorgesehen, die aus mehreren einzelnen zweiten Diodenlasern 2 zusammengesetzt ist.

Im folgenden werden unterschiedliche Ausgestaltungen der Pumpstrahlungsleiteinrichtung 26 anhand der Darstellungen in den Fig. 2, 2a und 3 näher erläutert.

Bei der in Fig. 2 dargestellten Ausführung der Pumpstrahlungsleiteinrichtung 26 befindet sich die erste optische Faser 3 zum Leiten der ersten Pumpstrahlung für den Laseroszillator im Zentrum einer die zweite optische Faser 4 bildenden anderen Faser, welche die Pumpenergie für den nachfolgenden Verstärker leitet. Die von der zentralen ersten Faser 3 bereitgestellte Strahlung wird dazu verwendet, den miniaturisierten Puls-Laseroszillator 9 so zu pumpen, dass der Laserstrahl 13 erzeugt wird, dessen Energie in dem nachfolgenden Laserverstärker 23 erhöht wird. Die in der von der ringförmig um die zentrale erste optische Faser 3 angeordneten zweiten optischen Faser 4 geführte zweite Pumpstrahlung für den Laserverstärker 23 wird mittels der optischen Umlenkeinrichtung 22 so kollimiert, dass sie um den Laseroszillator 9 herum geführt wird und schließlich in den axial angeordneten Verstärkerkristall 14 fokussiert wird.

Bei der in Fig. 2a dargestellten weiteren Ausführung der Pumpstrahlungsleiteinrichtung 26 sind die beiden Pumpfasern für den Laseroszillator 9 und den Laserverstärker 23 - also die erste optische Faser 3 und die zweite optische Faser 4 - dicht nebeneinander angeordnet. In diesem Falle wird die zweite Fokussierlinse 12 für die zweite Pumpstrahlung 6 (Pumpstrahlung des Verstärkerkristalls 14) geringfügig transversal verschoben angeordnet, so dass der Laserstrahl 13 und der Pumpstrahl im Verstärkerkristall 14 übereinander liegen. Die in den Fig. 2 und 2a dargestellten Pumpstrahlungsleiteinrichtungen sind besonders für die in Fig. 1 dargestellte erste Ausführungsform der Laser-Verstärker-Anordnung 19 geeignet.

Bei der in Fig. 3 dargestellten alternativen Ausgestaltung der Pumpstrahlungsleiteinrichtung 26, welche insbesondere für die zweite Ausführungsform der Laserverstärkeranordnung 19 geeignet ist, ist die erste optische Faser 3, die die Pumpfaser für den Laseroszillator 9 bildet, von einem Faserbündel 4a aus mehreren zweiten optischen Fasern 4 umgeben, welche zusammen die Pumpstrahlung für den Laserverstärker 23 führen. Dadurch können noch größere Pumpleistungen für den Laserverstärker 23 bereitgestellt werden, da die Strahlung der mehreren Diodenlaser-Strahlquellen 2a für die optische Anregung des Laserverstärkers 23 genutzt werden kann.

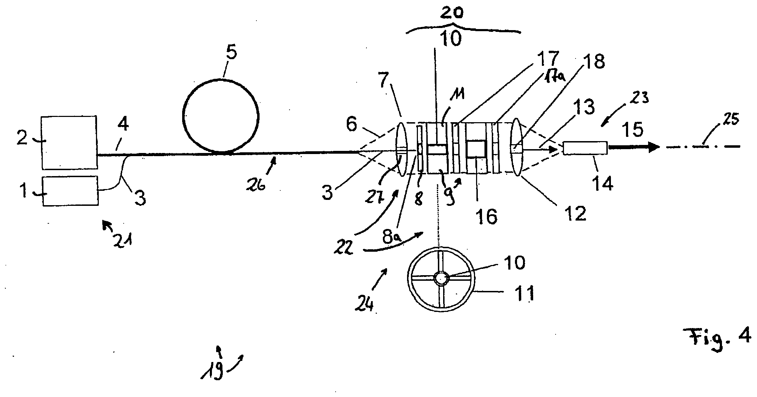

In Fig. 4 ist eine dritte Ausführungsform der Laserverstärkeranordnung 19 dargestellt, welche eine Weiterbildung der in der Fig. 1 gezeigten ersten Ausführungsform oder der in Fig. 2 gezeigten zweiten Ausführungsform darstellt. Die besonders kompakte Anordnung der Laseroszillator-Verstärker-Konfiguration 24 mit dem Laseroszillator 9 und dem axialen Laserverstärker 23 kann gemäß dieser dritten Ausführungsform auch dazu verwendet werden, um eine aktiv gütegeschaltete Laserverstärkeranordnung 19 zu realisieren. Zu diesem Zweck ist der passive Güteschalterkristall 9a der ersten oder zweiten Ausführungsform durch eine an sich bekannte elektro-optische Anordnung aus einem Polarisator 17, einem elektro-optischen Güteschalter 16 und einem Analysator 17a ersetzt, welche in dem Resonator des Laseroszillators 9 installiert werden. Voraussetzung hierfür ist, dass der elektro-optische Güteschalter 16 einen relativ kleinen Querschnitt aufweist, so dass die zweite Pumpstrahlung 6 an ihm vorbeigeleitet werden kann. Beispielsweise ist hierzu der Güteschalter 16 derart ausgewählt, dass sein Durchmesser im Bereich von etwa einem Zentimeter liegt. Aufgrund des geringen Durchmessers ist es möglich, die kollimierte zweite Pumpstrahlung 6 außen vorbeizuleiten. Solche miniaturisierten elektro-optischen Güteschalter 16 sind an sich bereits bekannt.

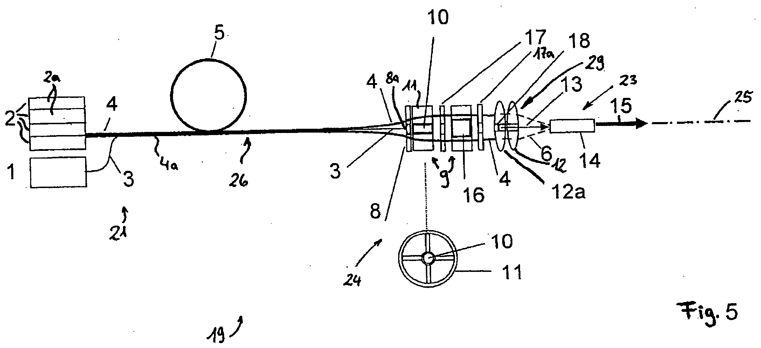

In Fig. 5 ist noch eine weitere Ausführungsform der Laserverstärkeranordnung 19 dargestellt, die ohne die optische Umlenkeinrichtung 22 auskommt. Hierbei ist das Faserbündel 4a, welches die Pumpstrahlung für den Laserverstärker 23 führt, so verlängert, dass die zweiten optischen Fasern 4 um den Laseroszillator 9 herumgeführt werden können. Die austretende zweite Pumpstrahlung 6 kann dann mit einer Kollimator-Fokussieroptik 29 in den Laserverstärker 23 fokussiert werden. Die Kollimator-Fokussier-Optik 29 weist eine Kollimator-Linse 12a und die zweite Fokussierlinse 12 auf. Der im Laseroszillator 9 erzeugte Laserstrahl 13 tritt durch im Zentrum der Kollimator-Fokussieroptik 29 vorhandene Durchbohrungen in den angeregten Verstärkerkristall 16 ein, wo er verstärkt wird - verstärkter Laserstrahl 15-.

Das dargestellte Ausführungsbeispiel gemäß Fig. 5 nutzt wie das in Fig. 4 dargestellte Ausführungsbeispiel der Laserverstärkeranordnung 19 den aktiven Güteschalter mit dem elektro-optischen Güteschalter 16 sowie den Polarisator 16 und Analysator 17a. Der Güteschalter 16 ist hier an einer Halterung zentrisch gehalten, die ähnlich der Halterung 11 ausgeführt ist. Ein Auskoppelspiegel 18 ist bei dem in Fig. 5 dargestellten Ausführungsbeispiel im Bereich der Durchbohrung der Kollimatorlinse 12a angebracht.

Die anhand der Figuren 1 bis 5 beschriebenen Konfigurationen der Laserverstärkeranordnung 19 können außer für die Erzeugung von kurzen Laserpulsen prinzipiell auch als Oszillator-Verstärker-Anordnung für die Erzeugung kontinuierlicher oder quasi-kontinuierlicher Laserstrahlung bzw. auch Single-Frequency-Laserstrahlung verwendet werden, wenn der Güteschalterkristall 9a nicht eingesetzt wird oder der Laseroszillator 9 als Single-Frequency-Laser ausgebildet ist. Dabei werden die wesentlichen Eigenschaften des Laserstrahles 13, 15 bis auf die Leistung des Gesamtsystems durch den Laseroszillator 9 bestimmt. Auch hierbei ist es von Vorteil, wenn die Leistung des Laseroszillators 9 unabhängig von der Verstärkung geregelt werden kann, so dass sich die optimalen Strahleigenschaften im Bereich geringer Ausgangsleistungen des Laseroszillators 9 erzielen lassen.

Bei den zuvor beschriebenen Ausführungsformen wird erreicht, dass mit einem hohen Miniaturisierungsgrad ein leistungsstarker Laser mit hoher Strahlqualität und einem großen Wirkungsgrad realisiert werden kann.

Weitere besondere Vorteile, insbesondere im Vergleich zu der bekannten miniaturisierten Laserverstärkeranordnung aus dem Stand der Technik nach der US 6,512,630 B1 sind:
- Der Laseroszillator 9 und der Laserverstärker 23 können unabhängig voneinander optimiert werden;
- Der im Laseroszillator 9 erzeugte Laserstrahl 13 wird unbeeinflusst von optischen Komponenten verstärkt;
- Die Zahl der pro Pumppuls emittierten Laserpulse kann unabhängig von der Verstärkerleistung eingestellt werden;
- durch eine separate Anordnung des Auskoppelspiegels 18 kann der Resonator des Laseroszillators 9 so verlängert werden, dass eine hohe Strahlqualität erreichbar wird; und
- eine passive oder aktive Güteschaltung ist möglich.

### Bezugszeichenliste

- 1: erster Diodenlaser (für erste Pumpstrahlung)
- 2: zweiter Diodenlaser (für zweite Pumpstrahlung, vorzugsweise Hochleistungsdiodenlaser)
- 2a: Diodenlaser-Strahlquellen (für zweite Pumpstrahlung)
- 3: erste optische Faser
- 4: zweite optische Faser
- 4a: Faserbündel (aus mehreren zweiten optischen Fasern)
- 5: optische Faserleitung (kombinierte erste und zweite optische Faser(n))
- 6: zweite Pumpstrahlung
- 7: Kollimatorlinse für zweite Pumpstrahlung
- 8: Halterung für kleine Fokussierlinse
- 8a: erste (kleinere) Fokussierlinse für erste Pumpstrahlung (aus erstem Diodenlaser)
- 9: Laseroszillator
- 9a: Güteschalter(-kristall)
- 10: Laserkristall
- 11: Halterung für Laserkristall mit Stegen
- 12: zweite (größere) Fokussierlinse für zweite Pumpstrahlung
- 12a: Kollimatorlinse
- 13: Laserstrahl
- 14: Verstärkerkristall
- 15: verstärkter Laserstrahl
- 16: elektro-optischer Güteschalter
- 17: Polarisator
- 17a: Analysator
- 18: Auskoppelspiegel
- 19: Laserverstärkeranordnung
- 20: Strecke
- 21: Pumpquelle
- 22: optische Umlenkeinrichtung
- 23: Laserverstärker
- 24: Laseroszillator-Verstärker-Konfiguration
- 25: Längsachse
- 26: Pumpstrahlungsleiteinrichtung
- 27: erster Durchlass
- 28: zweiter Durchlass
- 29: Kollimator-Fokussier-Optik

## Patentansprüche

1. Laserverstärkeranordnung (19) mit:
einer optischen Pumpquelle (21) zum Aussenden von Pumpstrahlung (6) und einer axial angeordneten Laseroszillator-Verstärker-Konfiguration (24), die durch die Pumpstrahlung (6) gepumpt werden kann,
wobei die Laseroszillator-Verstärker-Konfiguration (24) einen Laseroszillator (9), der durch einen Teil der Pumpstrahlung zum Aussenden eines Laserstrahles (13) anregbar ist, und
einen Laserverstärker (23) aufweist, der sowohl zum Empfangen des Laserstrahls (13) als auch von Pumpstrahlung (6) ausgebildet ist, um den Laserstrahl (13) mittels der Pumpstrahlung (6) zu verstärken,
wobei die Pumpquelle (21) zum Einleiten der Pumpstrahlung (6) in die Laser-Verstärker-Konfiguration (24) an einem ersten Längsende der Laser-Verstärker-Konfiguration (24), das einem zweiten Längsende der Laser-Verstärker-Konfiguration (24), an dem eine verstärkte Laserstrahlung (15) austritt, entgegengesetzt liegt, ausgebildet ist,
und wobei der Laseroszillator (9) und der Laserverstärker (23) bezüglich einer Längsachse (25) der Laseroszillator-Verstärker-Konfiguration (24) koaxial oder kollinear angeordnet sind,
**dadurch gekennzeichnet,**
**dass** die Pumpquelle (21) wenigstens eine erste Strahlquelle (1) zum Erzeugen einer ersten Pumpstrahlung zum Pumpen des Laseroszillators (9), wenigstens eine zweite Strahlquelle (2) zum Erzeugen einer zweiten Pumpstrahlung (6) für den Laserverstärker (23) und eine gemeinsame Pumpstrahlungsleiteinrichtung (26) zum Leiten sowohl der ersten als auch der zweiten Pumpstrahlung aufweist, mittels der sowohl die erste als auch die zweite Pumpstrahlung (6) zum longitudinalen Pumpen in der gleichen Richtung der Längsachse (25) an dem ersten Längsende in die Laseroszillator-Verstärker-Konfiguration (24) einleitbar sind.

2. Laserverstärkeranordnung nach Anspruch 1,
**dadurch gekennzeichnet,**
**dass** die erste (1) und die zweite (2) Strahlquelle unabhängig voneinander betreibbar sind, so dass der Laseroszillator (9) durch die erste Pumpstrahlung und der Laserverstärker (23) durch zweite Pumpstrahlung (6) unabhängig voneinander optisch pumpbar sind.

3. Laserverstärkeranordnung nach einem der voranstehenden Ansprüche,
**dadurch gekennzeichnet,**
**dass** die erste Strahlquelle ein erster Diodenlaser (1) ist und/oder dass die zweite Strahlquelle ein zweiter Diodenlaser (2) ist oder durch mehrere zweite Diodenlaser (2a) gebildet ist.

4. Laserverstärkeranordnung nach einem der voranstehenden Ansprüche,
**dadurch gekennzeichnet,**
**dass** die erste und/oder die zweite Strahlquelle (1, 2) mit der Laseroszillator-Verstärker-Konfiguration (24) fasergekoppelt sind.

5. Laserverstärkeranordnung nach Anspruch 4,
**dadurch gekennzeichnet,**
**dass** die Pumpstrahlungsleiteinrichtung (26) wenigstens eine erste optische Faser (3) zum Leiten der ersten Pumpstrahlung und wenigstens eine zweite optische Faser (4, 4a) zum Leiten der zweiten Pumpstrahlung (6) aufweist.

6. Laserverstärkeranordnung nach Anspruch 5,
**dadurch gekennzeichnet,**
**dass** die Pumpstrahlungsleiteinrichtung (26) eine optische Faserleitung (5) aufweist, in der die wenigstens eine erste optische Faser (3) und die wenigstens eine zweite optische Faser (4, 4a) zur parallelen Leitung der Pumpstrahlungen kombiniert sind.

7. Laserverstärkeranordnung nach Anspruch 6,
**dadurch gekennzeichnet,**
**dass** in der optischen Faserleitung (5) die erste optische Faser (3) und die zweite optische Faser (4, 4a) koaxial oder parallel zueinander verlaufen.

8. Laserverstärkeranordnung nach einem der Ansprüche 5 bis 7,
**dadurch gekennzeichnet,**
**dass** die Pumpstrahlleitungseinrichtung (26) ein Faserbündel (4a) aus mehreren zweiten optischen Fasern (4) zum Leiten der zweiten Pumpstrahlung (6) aufweist.

9. Laserverstärkeranordnung nach einem der Ansprüche 5 bis 8,
**dadurch gekennzeichnet,**
**dass** in der optischen Faserleitung (5) die erste optische Faser (3) mittig innerhalb der zweiten optischen Faser (4) oder mittig innerhalb eines Faserbündels (4a) aus mehreren zweiten optischen Fasern (4) verläuft.

10. Laserverstärkeranordnung nach einem der voranstehenden Ansprüche,
**dadurch gekennzeichnet,**
**dass** die zweite Strahlquelle (2, 2a) wesentlich leistungsstärker als die erste Strahlquelle (1) ist.

11. Laserverstärkeranordnung nach einem der voranstehenden Ansprüche,
**dadurch gekennzeichnet,**
**dass** eine optische Umlenkeinrichtung (22) zum Leiten der zweiten Pumpstrahlung (6) an dem Laseroszillator (9) vorbei zu dem Laserverstärker (23) vorgesehen ist.

12. Laserverstärkeranordnung nach Anspruch 11,
**dadurch gekennzeichnet,**
**dass** die optische Umlenkeinrichtung (22) eine Kollimator-Linseneinrichtung zum Kollimieren der zweiten Pumpstrahlung (6) derart aufweist, dass die zweite Pumpstrahlung (6) über eine definierte Strecke (20) quasi-parallel verläuft.

13. Laserverstärkeranordnung nach Anspruch 12,
**dadurch gekennzeichnet,**
**dass** die Umlenkeinrichtung derart ausgebildet ist, dass die zweite Pumpstrahlung (6) um den Laseroszillator (9) herum verläuft.

14. Laserverstärkeranordnung nach Anspruch 12 oder 13,
**dadurch gekennzeichnet,**
**dass** der Laseroszillator (9) innerhalb oder an der definierten Strecke (20) angeordnet ist und einen Querschnitt aufweist, der wesentlich kleiner ist als der Querschnitt der durch die Umlenkeinrichtung (22) über die Strecke (20) geleiteten zweiten Pumpstrahlung (6).

15. Laserverstärkeranordnung nach einem der Ansprüche 12 bis 14,
**dadurch gekennzeichnet,**
**dass** die Kollimator-Linseneinrichtung eine Kollimatorlinse (7) oder eine als Kollimatorlinse wirkende Eintrittsfläche eines Linsenblocks aufweist.

16. Laserverstärkeranordnung nach einem der Ansprüche 11 bis 15,
**dadurch gekennzeichnet,**
**dass** die Umlenkeinrichtung (22) einen ersten Durchlass (27) zum durch die Umlenkeinrichtung (22) unbeeinflussten Durchlassen der ersten Pumpstrahlung zu dem Laseroszillator (9) aufweist.

17. Laserverstärkeranordnung nach Anspruch 16 und nach einem der Ansprüche 12 bis 15,
**dadurch gekennzeichnet,**
**dass** der erste Durchlass (27) mittig und/oder koaxial zur Längsachse (25) durch die Kollimator-Linsenanordnung verläuft.

18. Laserverstärkeranordnung nach einem der Ansprüche 16 oder 17 und nach einem der Ansprüche 5 bis 9,
**dadurch gekennzeichnet,**
**dass** die erste optische Faser (3) durch den ersten Durchlass (27) hindurch zu dem Laseroszillator (9) geführt ist.

19. Laserverstärkeranordnung nach einem der voranstehenden Ansprüche,
**dadurch gekennzeichnet,**
**dass** der Laseroszillator (9) einen Laserkristall (10) aufweist.

20. Laserverstärkeranordnung nach Anspruch 19,
**dadurch gekennzeichnet,**
**dass** der Laserkristall (10) mit einem passiven oder aktiven Güteschalter (9a, 16) kombiniert ist.

21. Laserverstärkeranordnung nach einem der voranstehenden Ansprüche,
**dadurch gekennzeichnet,**
**dass** der Laseroszillator (9) und/oder ein Laserkristall (10) desselben an einer Halterung (10) angeordnet ist, durch die die zweite Pumpstrahlung (6) am Laseroszillator (9) bzw. Laserkristall (10) vorbei hindurchtreten kann.

22. Laserverstärkeranordnung nach einem der voranstehenden Ansprüche,
**dadurch gekennzeichnet,**
**dass** eine erste Fokussierlinse (8a) vor einer Einkoppelfläche des Laseroszillators (9) angebracht ist, um die erste Pumpstrahlung in den Laseroszillator (9) zu fokussieren.

23. Laserverstärkeranordnung nach Anspruch 22,
**dadurch gekennzeichnet,**
**dass** der Abstand der ersten Fokussierlinse (8a) zu der Einkoppelfläche einstellbar und/oder variabel ist.

24. Laserverstärkeranordnung nach einem der voranstehenden Ansprüche,
**dadurch gekennzeichnet,**
**dass** eine Fokussier-Linseneinrichtung vorgesehen ist, um die an dem Laseroszillator (9) vorbei und/oder um den Laseroszillator (9) herum geleitete zweite Pumpstrahlung (6) auf den Laserverstärker (24) zu fokussieren.

25. Laserverstärkeranordnung nach Anspruch 24,
**dadurch gekennzeichnet,**
**dass** die zwischen dem Laseroszillator (9) und dem Laserverstärker (23) angeordnete Fokussier-Linseneinrichtung einen zweiten Durchlass zum durch die Fokussier-Linseneinrichtung unbeeinflussten Durchlass des Laserstrahles (13) von dem Laseroszillator (9) zu dem Laserverstärker (24) hat.

26. Laserverstärkeranordnung nach einem der Ansprüche 24 oder 25,
**dadurch gekennzeichnet,**
**dass** die Fokussier-Linseneinrichtung eine Fokussierlinse (12) oder eine als Fokussierlinse wirkende Austrittsfläche eines Linsenblocks hat.

27. Verwendung einer Laserverstärkeranordnung nach einem der voranstehenden Ansprüche:
• als Roboter -getragener Laser,
• in einem miniaturisierten Transmitter für LIDAR-Systeme, insbesondere in Luftfahrzeugen,
• als Lasertransmitter für Weltraumanwendungen oder
• als Pumplaser für optisch nichtlineare Prozesse.

## Claims

1. Laser amplifier arrangement (19), comprising:
an optical pump source (21) for emitting pump radiation (6), and
an axially arranged laser oscillator/amplifier configuration (24), which can be pumped by the pump radiation (6),
wherein the laser oscillator/amplifier configuration (24) has a laser oscillator (9), which can be excited by a portion of the pump radiation to emit a laser beam (13), and
a laser amplifier (23), which is configured to receive both the laser beam (13) and pump radiation (6) so as to amplify the laser beam (13) by means of the pump radiation (6),
wherein the pump source (21) is configured to introduce the pump radiation (6) into the laser amplifier configuration (24) at a first longitudinal end of the laser amplifier configuration (24), which is located opposite a second longitudinal end of the laser amplifier configuration (24) at which amplified laser radiation (15) emerges,
and wherein the laser oscillator (9) and the laser amplifier (23) are arranged coaxially or collinearly with respect to a longitudinal axis (25) of the laser oscillator/amplifier configuration (24),
**characterised in that** the pump source (21) has at least one first beam source (1) for generating first pump radiation for pumping the laser oscillator (9), at least one second beam source (2) for generating second pump radiation (6) for the laser amplifier (23), and a common pump radiation guiding device (26) for guiding both the first and the second pump radiation, by means of which both the first and the second pump radiation (6) can be introduced into the laser oscillator/amplifier configuration (24) at the first longitudinal end for longitudinal pumping in the same direction of the longitudinal axis (25).

2. Laser amplifier arrangement according to claim 1, **characterised in that** the first beam source (1) and the second beam source (2) can be operated independently of one another, so that the laser oscillator (9) can be optically pumped by the first pump radiation and the laser amplifier (23) can be optically pumped by second pump radiation (6), independently of one another.

3. Laser amplifier arrangement according to any one of the preceding claims, **characterised in that** the first beam source is a first diode laser (1) and/or **in that** the second beam source is a second diode laser (2) or is formed by a plurality of second diode lasers (2a).

4. Laser amplifier arrangement according to any one of the preceding claims, **characterised in that** the first and/or the second beam source (1, 2) is fibre-coupled to the laser oscillator/amplifier configuration (24).

5. Laser amplifier arrangement according to claim 4, **characterised in that** the pump radiation guiding device (26) has at least one first optical fibre (3) for guiding the first pump radiation and at least one second optical fibre (4, 4a) for guiding the second pump radiation (6).

6. Laser amplifier arrangement according to claim 5, **characterised in that** the pump radiation guiding device (26) has an optical fibre line (5) in which the at least one first optical fibre (3) and the at least one second optical fibre (4, 4a) are combined for parallel guidance of the pump radiations.

7. Laser amplifier arrangement according to claim 6, **characterised in that**, in the optical fibre line (5), the first optical fibre (3) and the second optical fibre (4, 4a) run coaxially or parallel to one another.

8. Laser amplifier arrangement according to any one of claims 5 to 7, **characterised in that** the pump radiation guiding device (26) has a fibre bundle (4a) consisting of a plurality of second optical fibres (4) for guiding the second pump radiation (6).

9. Laser amplifier arrangement according to any one of claims 5 to 8, **characterised in that**, in the optical fibre line (5), the first optical fibre (3) runs centrally inside the second optical fibre (4) or centrally inside a fibre bundle (4a) consisting of a plurality of second optical fibres (4).

10. Laser amplifier arrangement according to any one of the preceding claims, **characterised in that** the second beam source (2, 2a) is of substantially higher power than the first beam source (1).

11. Laser amplifier arrangement according to any one of the preceding claims, **characterised in that** an optical deflection device (22) is provided for guiding the second pump radiation (6) past the laser oscillator (9) to the laser amplifier (23).

12. Laser amplifier arrangement according to claim 11, **characterised in that** the optical deflection device (22) has a collimator lens device for collimating the second pump radiation (6) in such a way that the second pump radiation (6) runs in a quasi-parallel manner over a defined section (20).

13. Laser amplifier arrangement according to claim 12, **characterised in that** the deflection device is configured in such a way that the second pump radiation (6) runs around the laser oscillator (9).

14. Laser amplifier arrangement according to claim 12 or 13, **characterised in that** the laser oscillator (9) is arranged within or at the defined section (20) and has a cross-section that is substantially smaller than the cross-section of the second pump radiation (6) guided over the section (20) by the deflection device (22).

15. Laser amplifier arrangement according to any one of claims 12 to 14, **characterised in that** the collimator lens device has a collimator lens (7) or an entry face of a lens block that acts as a collimator lens.

16. Laser amplifier arrangement according to any one of claims 11 to 15, **characterised in that** the deflection device (22) has a first aperture (27) for enabling the first pump radiation to pass to the laser oscillator (9) in a manner uninfluenced by the deflection device (22).

17. Laser amplifier arrangement according to claim 16 and according to any one of claims 12 to 15, **characterised in that** the first aperture (27) runs centrally or coaxially with the longitudinal axis (25) through the collimator lens arrangement.

18. Laser amplifier arrangement according to any one of claims 16 or 17 and according to any one of claims 5 to 9, **characterised in that** the first optical fibre (3) is fed through the first aperture (27) to the laser oscillator (9).

19. Laser amplifier arrangement according to any one of the preceding claims, **characterised in that** the laser oscillator (9) has a laser crystal (10).

20. Laser amplifier arrangement according to claim 19, **characterised in that** the laser crystal (10) is combined with a passive or active Q-switch (9a, 16).

21. Laser amplifier arrangement according to any one of the preceding claims, **characterised in that** the laser oscillator (9) and/or a laser crystal (10) thereof is arranged on a holder (10), through which the second pump radiation (6) can travel past the laser oscillator (9) and/or laser crystal (10).

22. Laser amplifier arrangement according to any one of the preceding claims, **characterised in that** a first focusing lens (8a) is fitted in front of a coupling-in face of the laser oscillator (9) in order to focus the first pump radiation into the laser oscillator (9).

23. Laser amplifier arrangement according to claim 22, **characterised in that** the distance of the first focusing lens (8a) from the coupling-in face is adjustable and/or variable.

24. Laser amplifier arrangement according to any one of the preceding claims, **characterised in that** a focusing lens device is provided for focusing onto the laser amplifier (24) the second pump radiation (6) that is guided past the laser oscillator (9) and/or around the laser oscillator (9).

25. Laser amplifier arrangement according to claim 24, **characterised in that** the focusing lens device arranged between the laser oscillator (9) and the laser amplifier (23) has a second aperture for enabling the laser beam (13) to pass from the laser oscillator (9) to the laser amplifier (24) in a manner uninfluenced by the focusing lens device.

26. Laser amplifier arrangement according to any one of claims 24 or 25, **characterised in that** the focusing lens device has a focusing lens (12) or an exit face of a lens block that acts as a focusing lens.

27. Use of a laser amplifier arrangement according to any one of the preceding claims:
- as a robot-mounted laser,
- in a miniaturized transmitter for LIDAR systems, particularly in aircraft,
- as a laser transmitter for use in space, or
- as a pump laser for optically non-linear processes.

## Revendications

1. Système amplificateur laser (19) avec :
une source de pompage optique (21) pour l'émission de rayonnement de pompage (6) et
une configuration oscillateur laser-amplificateur laser (24) agencée axialement, qui peut être pompée par le rayonnement de pompage (6),
dans lequel la configuration oscillateur laser-amplificateur laser (24) présente un oscillateur laser (9), qui peut être excité par une partie du rayonnement de pompage pour l'émission d'un rayon laser (13), et
un amplificateur laser (23), qui est réalisé aussi bien pour la réception du rayon laser (13) que par le rayonnement de pompage (6), pour renforcer le rayon laser (13) au moyen du rayonnement de pompage (6),
dans lequel la source de pompage (21) est réalisée pour l'introduction du rayonnement de pompage (6) dans la configuration amplificateur laser (24) au niveau d'une première extrémité longitudinale de la configuration amplificateur laser (24), qui est située à l'opposée d'une deuxième extrémité longitudinale de la configuration amplificateur laser (24), au niveau de laquelle un rayonnement laser (15) amplifié sort,
et dans lequel l'oscillateur laser (9) et l'amplificateur laser (23) sont agencés de manière coaxiale ou colinéaire par rapport à un axe longitudinal (25) de la configuration oscillateur laser-amplificateur laser (24),
**caractérisé en ce**
**que** la source de pompage (21) présente au moins une première source de rayonnement (1) pour la génération d'un premier rayonnement de pompage pour le pompage de l'oscillateur laser (9), au moins une deuxième source de rayonnement (2) pour la génération d'un deuxième rayonnement de pompage (6) pour l'amplificateur laser (23) et un dispositif de conduite de rayonnement de pompage (26) commun pour la conduite aussi bien du premier que du deuxième rayonnement de pompage, au moyen duquel aussi bien le premier que le deuxième rayonnement de pompage (6) peuvent être introduits pour le pompage longitudinal dans la même direction de l'axe longitudinal (25) au niveau de la première extrémité longitudinale dans la configuration oscillateur laser-amplificateur laser (24).

2. Système amplificateur laser selon la revendication 1,
**caractérisé en ce**
**que** la première (1) et la deuxième (2) source de rayonnement peuvent être exploitées indépendamment l'une de l'autre de sorte que l'oscillateur laser (9) puisse être pompé par le premier rayonnement de pompage et l'amplificateur laser (23) par le deuxième rayonnement de pompage (6) optiquement indépendamment l'un de l'autre.

3. Système amplificateur laser selon l'une quelconque des revendications précédentes,
**caractérisé en ce**
**que** la première source de rayonnement est un premier laser diode (1) et/ou que la deuxième source de rayonnement est un deuxième laser diode (2) ou est formée par plusieurs deuxièmes lasers diode (2a).

4. Système amplificateur laser selon l'une quelconque des revendications précédentes,
**caractérisé en ce**
**que** la première et/ou la deuxième source de rayonnement (1, 2) sont couplées par fibres avec la configuration oscillateur laser-amplificateur laser (24).

5. Système amplificateur laser selon la revendication 4,
**caractérisé en ce**
**que** le dispositif de conduite de rayonnement de pompage (26) présente au moins une fibre optique (3) pour la conduite du premier rayonnement de pompe et au moins une deuxième fibre optique (4, 4a) pour la conduite du deuxième rayonnement de pompe (6).

6. Système amplificateur laser selon la revendication 5,
**caractérisé en ce**
**que** le dispositif de conduite de rayonnement de pompage (26) présente une ligne de fibre optique (5), dans laquelle l'au moins une première fibre optique (3) et l'au moins une deuxième fibre optique (4, 4a) sont combinées pour la conduite parallèle des rayonnements de pompage.

7. Système amplificateur laser selon la revendication 6,
**caractérisé en ce**
**que** dans la ligne de fibre optique (5), la première fibre optique (3) et la deuxième fibre optique (4, 4a) s'étendent coaxialement ou parallèlement l'une à l'autre.

8. Système amplificateur laser selon l'une quelconque des revendications 5 à 7,
**caractérisé en ce**
**que** le dispositif de conduite de rayonnement de pompage (26) présente un faisceau de fibres (4a) formé de plusieurs deuxièmes fibres optiques (4) pour la conduite du deuxième rayonnement de pompage (6).

9. Système amplificateur laser selon l'une quelconque des revendications 5 à 8,
**caractérisé en ce**
**que** dans la ligne de fibre optique (5), la première fibre optique (3) s'étend au milieu à l'intérieur de la deuxième fibre optique (4) ou au milieu à l'intérieur d'un faisceau de fibres (4a) formé de plusieurs deuxièmes fibres optiques (4).

10. Système amplificateur laser selon l'une quelconque des revendications précédentes,
**caractérisé en ce**
**que** la deuxième source de rayonnement (2, 2a) est sensiblement plus puissante que la première source de rayonnement (1).

11. Système amplificateur laser selon l'une quelconque des revendications précédentes,
**caractérisé en ce**
**qu'**un dispositif de renvoi optique (22) est prévu pour la conduite du deuxième rayonnement de pompage (6) en passant devant l'oscillateur laser (9) vers l'amplificateur laser (23).

12. Système amplificateur laser selon la revendication 11,
**caractérisé en ce**
**que** le dispositif de renvoi optique (22) présente un dispositif lentille de collimation pour la collimation du deuxième rayonnement de pompage (6) de telle sorte que le deuxième rayonnement de pompage (6) s'étend de manière quasi-parallèle sur un tronçon (20) défini.

13. Système amplificateur laser selon la revendication 12,
**caractérisé en ce**
**que** le dispositif de renvoi est réalisé de telle sorte que le deuxième rayonnement de pompage (6) s'étend autour de l'oscillateur laser (9).

14. Système amplificateur laser selon la revendication 12 ou 13,
**caractérisé en ce**
**que** l'oscillateur laser (9) est agencé à l'intérieur ou au niveau du tronçon (20) défini et présente une section transversale, qui est sensiblement plus petite que la section transversale du deuxième rayonnement de pompage (6) conduit par le dispositif de renvoi (22) sur le tronçon (20).

15. Système amplificateur laser selon l'une quelconque des revendications 12 à 14,
**caractérisé en ce**
**que** le dispositif lentille de collimation présente une lentille de collimation (7) ou une surface d'entrée d'un bloc de lentilles agissant comme lentille de collimation.

16. Système amplificateur laser selon l'une quelconque des revendications 11 à 15,
**caractérisé en ce**
**que** le dispositif de renvoi (22) présente un premier passage (27) pour le passage non influencé par le dispositif de renvoi (22) du premier rayonnement de pompage vers l'oscillateur laser (9).

17. Système amplificateur laser selon la revendication 16 et selon l'une quelconque des revendications 12 à 15,
**caractérisé en ce**
**que** le premier passage (27) s'étend au milieu et/ou coaxialement à l'axe longitudinal (25) par le système lentille de collimation.

18. Système amplificateur laser selon l'une quelconque des revendications 16 ou 17 et selon l'une quelconque des revendications 5 à 9,
**caractérisé en ce**
**que** la première fibre optique (3) est guidée à travers le premier passage (27) vers l'oscillateur laser (9).

19. Système amplificateur laser selon l'une quelconque des revendications précédentes,
**caractérisé en ce**
**que** l'oscillateur laser (9) présente un cristal laser (10).

20. Système amplificateur laser selon la revendication 19,
**caractérisé en ce**
**que** le cristal laser (10) est combiné avec un commutateur Q passif ou actif (9a, 16).

21. Système amplificateur laser selon l'une quelconque des revendications précédentes,
**caractérisé en ce**
**que** l'oscillateur laser (9) et/ou un cristal laser (10) de celui-ci est agencé au niveau d'un support (10), par lequel le deuxième rayonnement de pompage (6) peut traverser en passant devant l'oscillateur laser (9) ou le cristal laser (10).

22. Système amplificateur laser selon l'une quelconque des revendications précédentes,
**caractérisé en ce**
**qu'**une première lentille de focalisation (8a) est montée devant une surface de couplage de l'oscillateur laser (9) pour focaliser le premier rayonnement de pompage dans l'oscillateur laser (9).

23. Système amplificateur laser selon la revendication 22,
**caractérisé en ce**
**que** la distance de la première lentille de focalisation (8a) à la surface de couplage est variable et/ou réglable.

24. Système amplificateur laser selon l'une quelconque des revendications précédentes,
**caractérisé en ce**
**qu'**un dispositif de lentille de focalisation est prévu pour focaliser le deuxième rayonnement de pompage (6) conduit devant l'oscillateur laser (9) et/ou autour de l'oscillateur laser (9) sur l'amplificateur laser (24).

25. Système amplificateur laser selon la revendication 24,
**caractérisé en ce**
**que** le dispositif de lentille de focalisation agencé entre l'oscillateur laser (9) et l'amplificateur laser (23) a un deuxième passage pour le passage non influencé par le dispositif de lentille de focalisation du rayon laser (13) de l'oscillateur laser (9) à l'amplificateur laser (24).

26. Système amplificateur laser selon l'une quelconque des revendications 24 ou 25,
**caractérisé en ce**
**que** le dispositif de lentille de focalisation a une lentille de focalisation (12) ou une surface de sortie d'un bloc de lentilles agissant comme lentille de focalisation.

27. Utilisation d'un système amplificateur laser selon l'une quelconque des revendications précédentes :
- comme laser porté par robot,
- dans un transmetteur miniaturisé pour systèmes LIDAR, en particulier dans des aéronefs,
- comme transmetteur laser pour des applications spatiales ou
- comme laser de pompage pour des processus optiquement non linéaires.
